# EUROPEAN PATENT SPECIFICATION

(11) **EP 3 171 026 B1**
(45) Date of publication and mention of the grant of the patent: **19.02.2020**
(21) Application number: 16198908.2
(22) Date of filing: 15.11.2016
(51) Int. Cl.: F04B 43/073

(54) **AIR-OPERATED DOUBLE DIAPHRAGM PUMP**
LUFTBETRIEBENE DOPPELMEMBRANPUMPE
POMPE PNEUMATIQUE À DOUBLE MEMBRANE

(30) Priority: 23.11.2015 MY PI2015704245
(43) Date of publication of application: 24.05.2017
(73) Proprietor: Teh, Bee Cheong, 10470 George Town (MY)
(72) Inventor: Teh, Bee Cheong, 10470 George Town (MY)
(74) Representative: Zanoli, Enrico

(56) References cited:
- GB-A- 2 296 534
- US-A- 5 257 914
- US-A- 5 277 555
- US-A- 5 391 060
- US-A- 5 611 678
- US-A- 5 996 627
- US-A- 6 036 445

## Description

### Field of invention

The present invention relates to improvements made to an air operated double diaphragm pump. More specifically, the present invention relates to an air-operated double diaphragm pump with improvements made to a shaft and bushing of the pump to reduce air consumption of the pump.

### Background of the invention

Air-operated double diaphragm pumps or AODD pumps are positive displacement reciprocating pumps which operate using compressed air to exert pressure on diaphragms which creates a pumping action to move fluids. Patent document US-5,611,678-A discloses an AODD pump according to the preamble of claim 1.

AODD pumps are especially useful when the fluid is abrasive in nature or contains suspended particles which cannot be pumped using conventional axial and rotary pumps. Since pumping action is generated by hardwearing, flexible, synthetic diaphragms connected by a shaft oscillating within the two pumping chambers containing the fluid to be pumped, the AODD pumps are therefore not as prone to damage as conventional axial and rotary pumps are.

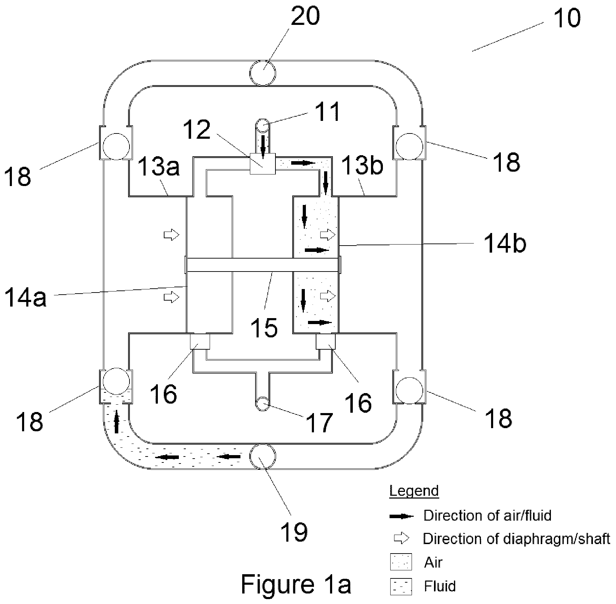

Figures 1a to 1d show how a prior art air-operated double diaphragm pump or AODD pump operates. While AODD pumps vary in design from one manufacturer to another manufacturer, a general design is shown in Figure 1a. Each pump (10) has a compressed air inlet (11) through which compressed air from an external source such as an air compressor is supplied. A pilot valve (12) directs compressed air into one of two chambers (13a/13b), wherein each chamber (13a/13b) is a volumetric space which is separated in two by a diaphragm (14a/14b), wherein one side is fillable with air and another side is fillable with fluid. The diaphragm (14a/14b) is movable due to pressure difference between compressed air in chamber (13a/13b) and fluid to be pumped at other side to create a pumping action which causes fluid to travel. Both diaphragms (14a/14b) are driven by a connecting shaft (15), such that motion of diaphragm (14a) in chamber (13a) at one side causes motion of diaphragm (14b) in chamber (13b) at another side. Fluid enters pump as shown in Figure 1a through fluid inlet (19) and exits through fluid outlet (20) and check valves (18) produce directional flow of fluid present at fluid side of the chambers (13a/13b).

In Figure 1a, the pump (10) does not have any fluid inside it and is supplied with compressed air, which is directed by pilot valve (12) into air side of chamber (13b) located at right side of the pump (10). As compressed air is directed into right chamber (13b), the pressure build-up causes the right diaphragm (14b) to move towards the right and at the same time connecting shaft (15) pulls left diaphragm (14a) at left chamber (13a) towards the right. Air present at fluid side of the right chamber (13b) is pushed out towards fluid outlet (20), while lower pressure at fluid side of left chamber (13a) caused by movement of left diaphragm (14a) towards the right draws fluid from fluid inlet (19).

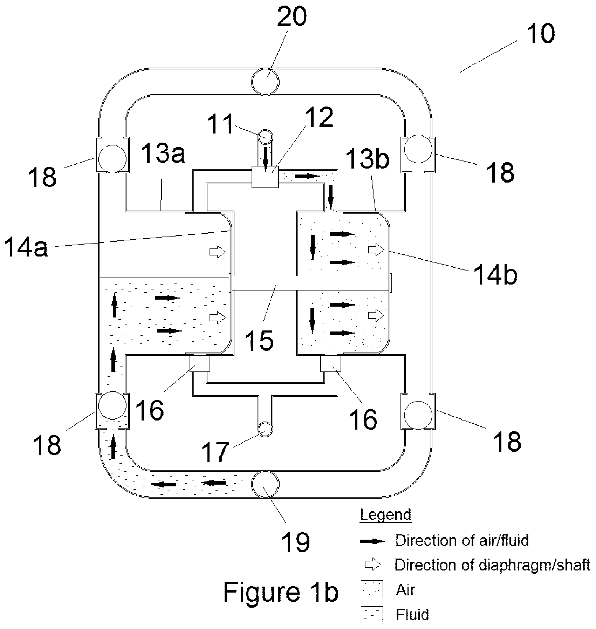

In Figure 1b, the right diaphragm (14b) has been pushed completely to the right, which also causes the left diaphragm (14a) to be pushed completely to the right. The pilot valve (12) then directs flow of compressed air into compressed air side of the left chamber (13a), which causes the left diaphragm (14a) to start moving leftwards due to compressed air pressure increasing at compressed air side of the left chamber (13a) and being greater than fluid pressure at fluid side of the left chamber (13a). Compressed air at compressed air side of the right chamber (13b) is allowed to escape to the compressed air outlet (17). Generally, each chamber (13a/13b) has an opening which allows air to bleed out to compressed air outlet (17) while the chamber (13a/13b) is filled with compressed air to move the diaphragm (14a/14b), however, certain pumps may have exhaust valves (16) which only open to permit air to escape but remain closed when the chamber (13a/13b) is filled with compressed air to move the diaphragm (14a/14b).

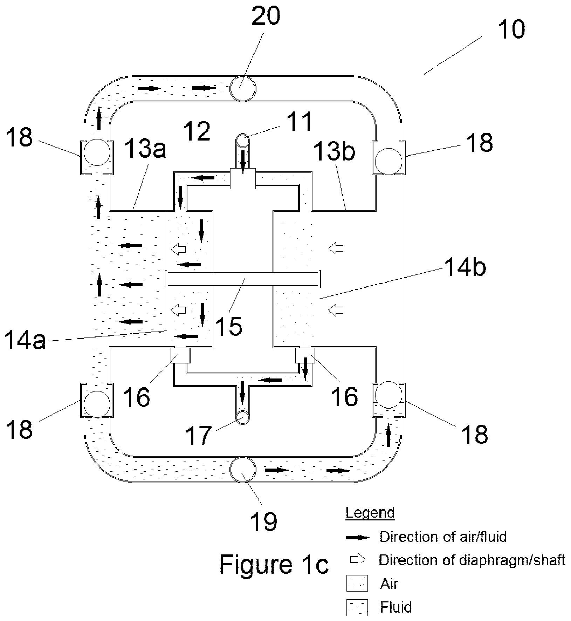

In Figure 1c, it is shown that as the left diaphragm (14a) moves leftwards, fluid which was drawn from the fluid inlet (19) into fluid side of left chamber (13a) is pumped towards fluid outlet (20). Check valves (18) ensure that fluid moves towards the fluid outlet (20) and prevent backflow of fluid to fluid inlet (19). At the same time, fluid is drawn from fluid inlet (19) into fluid side of right chamber (13b) by movement of right diaphragm (14b) which follows movement of left diaphragm (14a). Any remaining compressed air in the right chamber (13b) is forced outwards to the compressed air outlet (17).

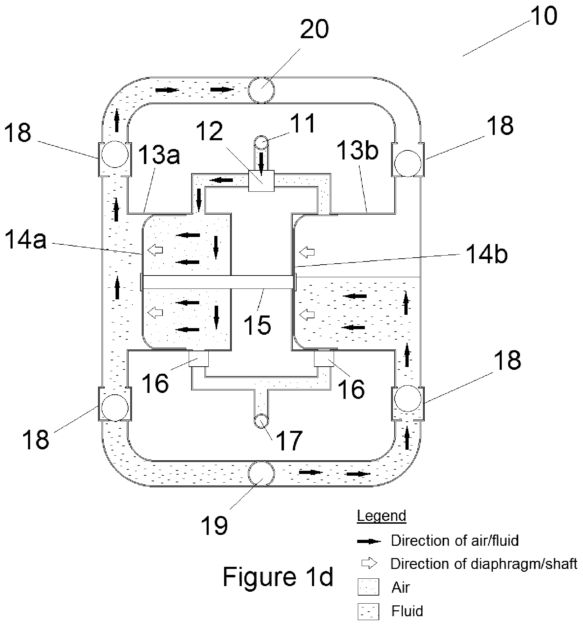

In Figure 1d, both left diaphragm (14a) and right diaphragm (14b) have been moved completely to the left. Fluid at fluid side of left chamber (13a) has been pumped upwards and more fluid can be drawn from fluid inlet (19) when left diaphragm (14a) moves rightwards. Fluid at fluid side of right chamber (13b) which was drawn by leftward movement of right diaphragm (14b) is now ready to be pumped upwards towards fluid outlet (20). Pilot valve (12) directs compressed air to right chamber (13b) which causes right diaphragm (14b) along with left diaphragm (14a) to be moved rightwards and cycle begins anew.

Such arrangement in prior art AODD pumps have inherent weaknesses, such as poor efficiency of the pump since compressed air has to be directed alternatingly to each chamber, which results in inertial losses where useful energy is lost when diaphragms shift in directions. Also, in order to increase efficiency of the pump, more parts are added to perform more functions which causes cost per pump to be increased and in turn become costlier to maintain due to high number of parts which require servicing. AODD pumps are less efficient as compared to an axial or rotary pump as they require more power to produce the same output. However, due to advantages of AODD pumps being able to function in situations where axial and rotary pumps are unable to, AODD pumps are still very much in demand and there is to there is a need to provide a more efficient AODD pump.

### Summary of the invention

The present invention relates to an air-operated double diaphragm pump, wherein the pump is disposed with a shaft and a bushing. The shaft includes a plurality of indentations which allow passage of air and the bushing is adapted to receive the shaft and be in sliding engagement with the shaft. The bushing includes vents formed on the bushing and a hole formed at each respective terminal portion of the bushing to allow passage of air. This shaft and bushing configuration allows compressed air to be bled out faster from a slide valve before the pump makes a complete diaphragm stroke and allows the slide valve to change direction. While the slide valve is changing direction, the pump would have made a complete diaphragm stroke through momentum of the shaft. This quick change in the slide valve direction also allows some compressed air to be retained in a chamber without being completely exhausted and the retained compressed air can be used for a next stroke, thus creating better efficiency by reducing air consumption.

### Brief description of the drawings

The drawings constitute a part of this specification and include an exemplary or preferred embodiment of the invention, which may be embodied in various forms. It should be understood, however, the disclosed preferred embodiment is merely exemplary of the invention. Therefore, the figures disclosed herein are not to be interpreted as limiting, but merely as the basis for the claims and for teaching one skilled in the art of the invention.
Figure 1a shows a front diagrammatic cross-sectional view of a prior art air-operated double diaphragm pump having a chamber filled with compressed air to pump fluid.
Figure 1b shows a front diagrammatic cross-sectional view of the prior art air-operated double diaphragm pump shown in Figure 1a with a chamber completely filled with compressed air and another chamber filled with fluid.
Figure 1c shows a front diagrammatic cross-sectional view of the prior art air-operated double diaphragm pump shown in Figure 1a having a chamber filled with compressed air and pushing fluid out while in another chamber, air present at air side of the chamber is allowed to escape while drawing fluid in.
Figure 1d shows a front diagrammatic cross-sectional view of the prior art air-operated double diaphragm pump shown in Figure 1a with one chamber completely pushing fluid out while being completely filled with compressed air and another chamber completely pushing air out while being completely filled with fluid.
Figure 2a shows an isometric view of a bushing used in a preferred embodiment of the present invention.
Figure 2b shows a top cross-sectional view of the bushing shown in Figure 2a, taken from section B-B of Figure 2d
Figure 2c shows a front cross-sectional view of the bushing shown in Figure 2a, taken from section C-C of Figure 2d
Figure 2d shows a front view of the bushing shown in Figure 2a
Figure 3a shows an isometric view of a shaft used in a preferred embodiment of the present invention.
Figure 3b shows a top view of the bushing shown in Figure 3a
Figure 3c shows a front cross-sectional view of the bushing shown in Figure 3a, taken from section A-A of Figure 3b
Figure 3d shows a side cross-sectional view of the bushing shown in Figure 3a, taken from section B-B of Figure 3c
Figure 4a shows a front cross-sectional view of a shaft being in sliding engagement with a bushing.
Figure 4b shows the same shaft and bushing shown in Figure 4a with the shaft having moved to a terminal point.
Figure 5a shows a front cross-sectional view of an air-operated double diaphragm pump being the preferred embodiment of the present invention having a chamber being filled with compressed air to pump fluid.
Figure 5b shows a front cross sectional view of the air-operated double diaphragm pump shown in Figure 5a having a chamber filled with compressed air and another chamber filled with fluid.
Figure 5c shows a front cross-sectional view of the air-operated double diaphragm pump shown in Figure 5a having a chamber filled with compressed air and pushing fluid out, while in another chamber, air present at fluid side of the chamber is allowed to escape while drawing fluid in.
Figure 5d shows a front cross-sectional view of the air-operated double diaphragm pump shown in Figure 5a having one chamber completely pushing fluid out while being completely filled with compressed air and another chamber completely pushing air out while being completely filled with fluid.

### Detailed description of the invention

Detailed description of preferred embodiment of the present invention is disclosed herein. It should be understood, however, that the embodiment is merely exemplary of the present invention, which may be embodied in various forms. Therefore, the details disclosed herein are not to be interpreted as limiting, but merely as the basis for the claim and for teaching one skilled in the art of the invention. The numerical data or ranges used in the specification are not to be construed as limiting.

Positions of components such as left chamber and right chamber are located as such to aid understanding of the invention and it would be appreciated by a person skilled in the art that positions of such components are not necessarily restricted as how they are described in this description and may vary based on a manufacturer's configuration.

In a preferred embodiment of the present invention, changes are made to configuration of parts of an AODD pump, in particular, a bushing and a shaft in engagement with the bushing. Such changes enable an increased flow rate of an AODD pump while reducing consumption rate of compressed air which is achieved by reducing obstacles for air to travel from compressed air inlet to compressed air outlet and also mechanical friction between shaft and bushing.

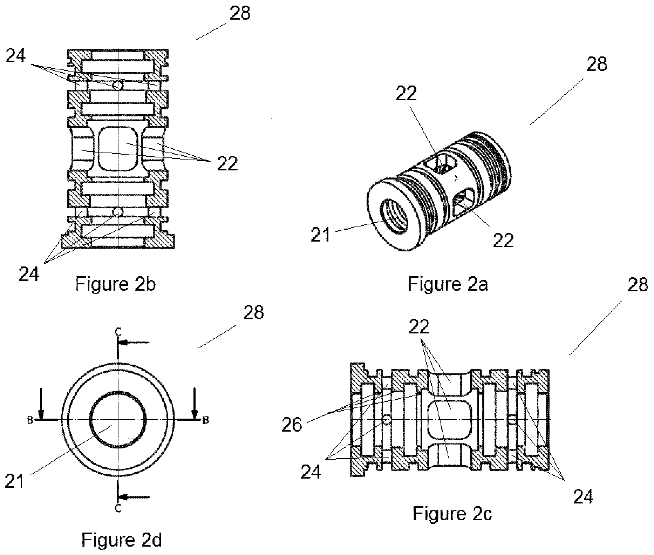

Figure 2a shows an isometric view of a bushing (28) while Figure 2b shows a top cross-sectional view of the same bushing (28), Figure 2c shows a side cross-sectional view of the bushing (28), and Figure 2d shows a front view of the bushing (28). Openings (21) at side of the bushing (28) allow a shaft to be passed through and correspond to diameter of shaft to which the bushing (28) is to be fitted such that a sliding fit is achieved. Vents (22) function to allow compressed air to pass through during operation of the AODD pump. Holes (24) receive compressed air from a compressed air inlet which is then directed into a chamber in order to move a diaphragm. As it can be seen in Figure 2b which shows a cross sectional view from above and Figure 2c which shows a side cross sectional view from a longitudinal side of the bushing (28), inner diameter of the bushing (28) is not constant, but varies at different sections of the bushing (28) by means of ribs (26) disposed along length of inner surface of the bushing (28) to increase the bushing relief area which improves airflow between bushing (28) and shaft by providing gaps for air to travel and allowing shaft to slide smoothly through bushing (28) as there is less surface area to cause friction between bushing (28) and shaft. These ribs (26) protrude radially from inner surface of the bushing (28) towards shaft and make sliding contact with the shaft. The bushing (28) is preferably made of plastics material such as ABS, DERLIN HDPE, LDPE, PE, however any rigid material with low friction are equally suitable.

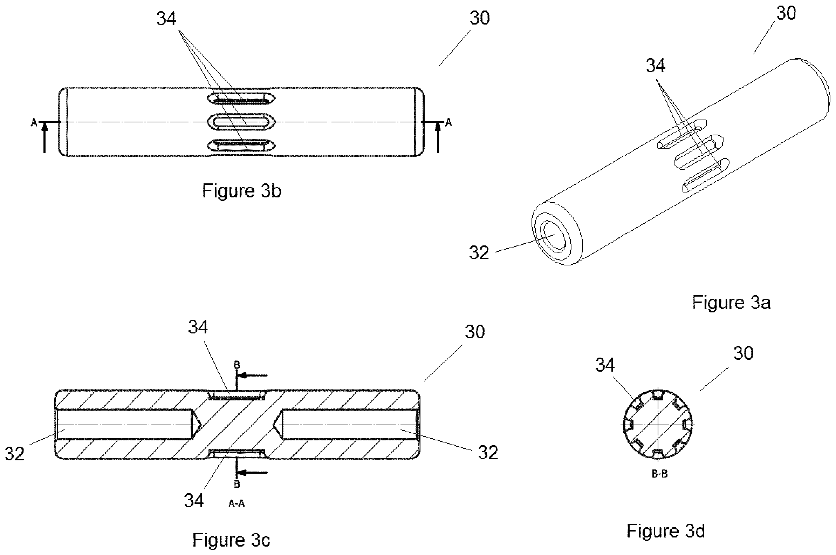

Figure 3a shows an isometric view of a shaft (30) while Figure 3b shows a top view of the same shaft (30), Figure 3c shows a front cross-sectional view of the shaft (30) and Figure 3d shows a side cross-sectional view of the shaft (30). The shaft is provided with indentations (34) disposed lengthwise at middle portion of the shaft (34). These indentations (34) function to allow air to pass freely through them. The shaft (30) is fastened to left and right diaphragms of an AODD pump at terminal ends of the shaft (30) where threaded holes (32) allow mechanical connection between the shaft (30) and the diaphragms of the AODD pump. The threaded holes (32) are adapted to receive screws, nuts or any elongate member configured for threaded connection. Alternatively, the terminal ends of the shaft (32) may not include threaded holes (32) but other means to allow for mechanical connection to diaphragm such as threaded ends, mating connections, or permanent connections such as welding or adhesives. Similar to the bushing (28), the shaft (30) is preferably made of plastics material such as ABS, HDPE, LDPE, PE, or any rigid material with low friction.

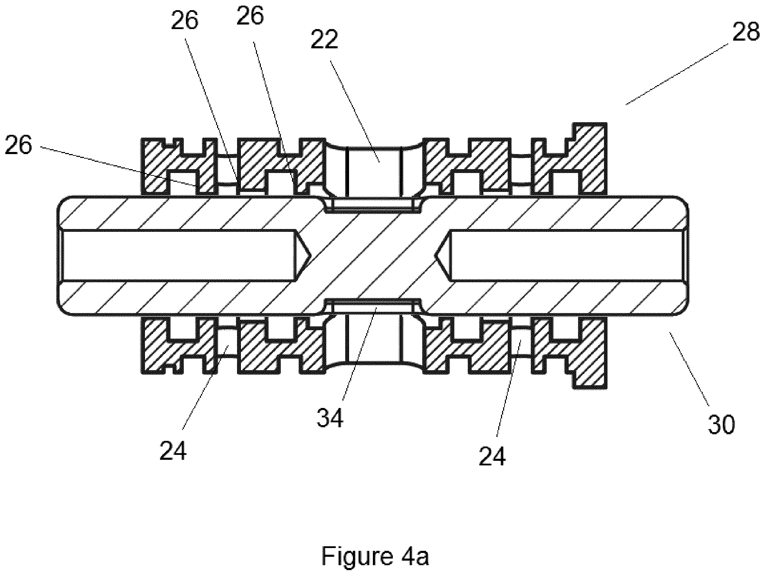

Figure 4a shows a cross-sectional view of the shaft (30) which is held by the bushing (28). Compressed air is allowed to pass through vents (22) and holes (24) of the bushing (28). Due to indentations (34) present on shaft (30), compressed air is allowed to pass through freely without blockage when the indentations (34) are aligned with the holes (24) and vents (22). A slide valve (not illustrated) directs compressed air to one side of the bushing (28) which goes into a first chamber and also initiates a first stroke, whereby the shaft (30) is moved to a first terminal point, wherein the terminal point is an end point which the shaft (30) does not travel past and instead changes direction. When the shaft (30) has travelled from one terminal point to another terminal point, a stroke is completed.

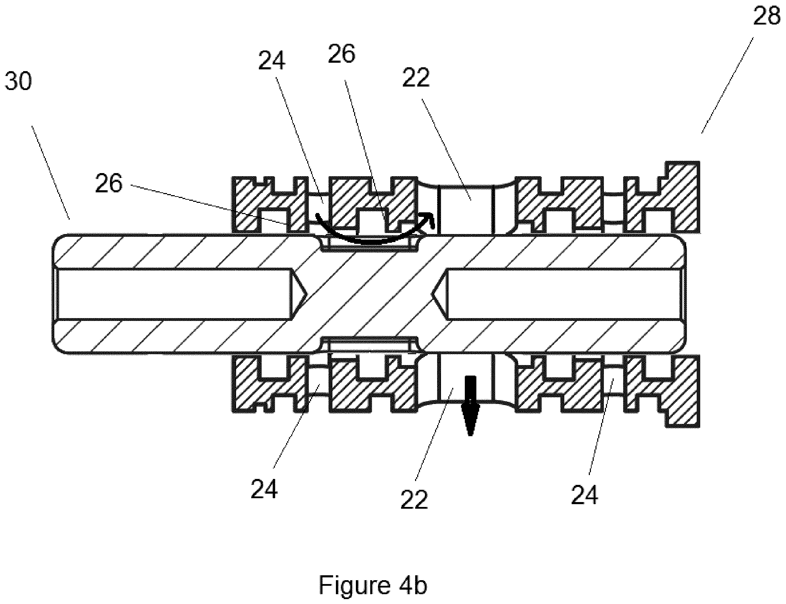

As shown in Figure 4b when the shaft (30) is moved to a first terminal point, which ends a first stroke, the indentations (34) on the shaft (30) are aligned with holes (24) and vents (22) of the bushing (28) such that a path is created which allows air from a slide valve directed to holes (24) to bleed through the path created by the alignment of the indentations (34) with the holes (24) and vents (22) and exhausted out. This creates a differential pressure which causes the slide valve to change direction and direct air to other side of the shaft (30) and bushing (28). When the slide valve changes direction, it will divert compressed air to the other side of the bushing (28) to a second chamber which initiates a next stroke. Due to quick change of direction in which the slide valve supplies air, a volume of air remains in a chamber rather being exhausted out completely during the next stroke. This causes the pump to use lesser air for the next stroke. Also, inertial losses are minimized when the shaft changes direction as it does not come to a halt and stop at a terminal point while air in a chamber is being vacated but immediately changes direction and moves to another point. As such, shifting rate of the pump is improved. This in effect increases flow rate of the pump to allow increased output when compared to a prior art AODD pump having same air consumption rate. Comparatively, a pump producing the same output as a prior art AODD pump consumes 30-40% less air than the prior art AODD pump.

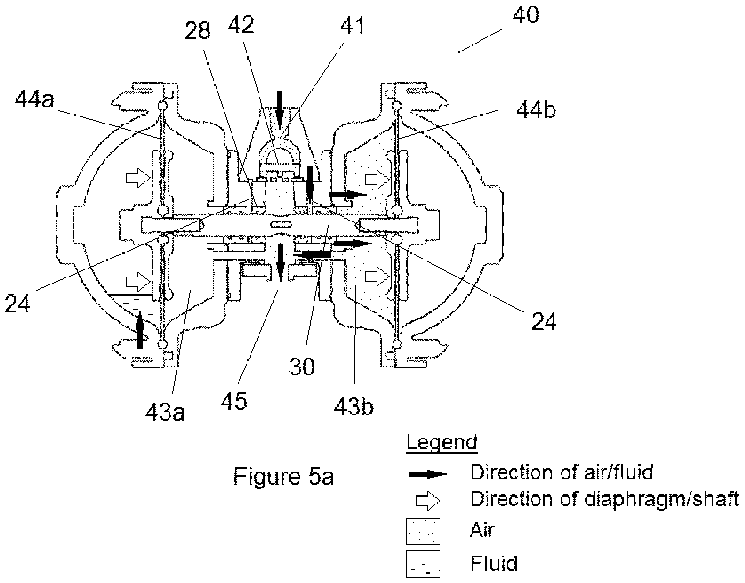

Figure 5a shows a preferred embodiment of the present invention in which an AODD pump (40) is disposed with a shaft (30) and bushing (28) as shown in Figures 2a to 2d and 3a to 3d. In place of a conventional pilot valve is a slide valve (42) which directs compressed air from a compressed air inlet (41) to one of two chambers (43a/43b) based on position of the slide valve (42). Inner volumetric area of the chambers (43a/43b) are separated by a diaphragm (44a/44b) and allow air and fluid to be pumped into and out of these chambers (43a/43b). It would be understood by a person skilled in the art that the diaphragms (44a/44b) separate air and fluid sides of the chambers (43a/43b) and do not allow air/fluid to mix. As with conventional prior art AODD pumps, compressed air is first directed into a chamber, which, as shown in this figure is right chamber (43b) of the AODD pump (40). Due to pressure of compressed air in chamber at compressed air side of right chamber (43b) being greater than pressure of air occupying fluid side of right chamber (43b), right diaphragm (44b) is moved rightwards which also causes left diaphragm (44a) connected to the right diaphragm (44b) via shaft (30) to be moved rightwards. Rightward movement of the left diaphragm (44a) causes fluid to be drawn into fluid side of the left chamber (43a). As there is no exhaust valve at either chambers (43a/43b), air is allowed to bleed and exit through compressed air outlet (45) while right chamber (43b) is being pressurized. Further, the pump (40) is configured such that air resistance in path of compressed air between compressed air inlet (41) and compressed air outlet (45) is minimized. This is achieved by providing paths between compressed air inlet (41) and compressed air outlet (45) for compressed air to travel, such as vents (22) formed on bushing (28) and indentations (34) on shaft (30). By reducing air resistance, less air is trapped between left and right chambers (43a & 43b) which in effect reduces mechanical resistance of the shaft (30).

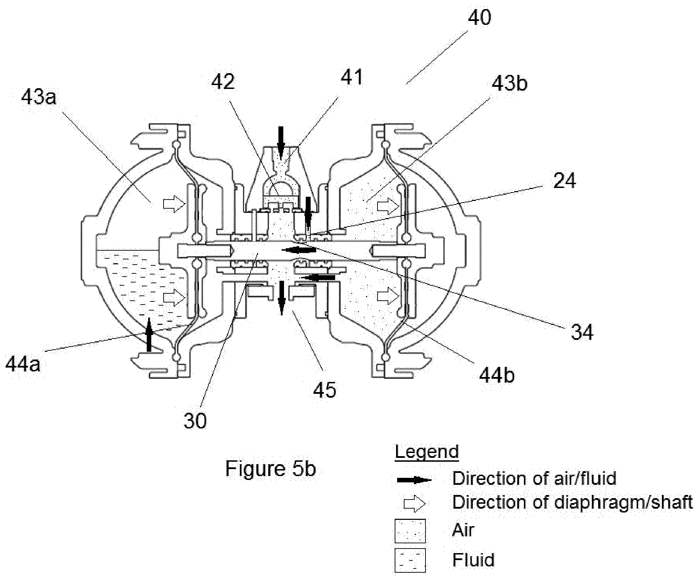

In Figure 5b, shaft (30), left diaphragm (44a), and right diaphragm (44b) have moved to right terminal point. This causes indentations (34) to be in line with the holes (24) at right side of the bushing (28). Compressed air now does not fill the right chamber (43b) but is directed towards the compressed air outlet (45). This also causes the shaft (30), along with left diaphragm (44a) and right diaphragm (44b) to shift in direction. Differential pressure causes slide valve (42) to be moved to another position which allows compressed air to be directed to left chamber (43a).

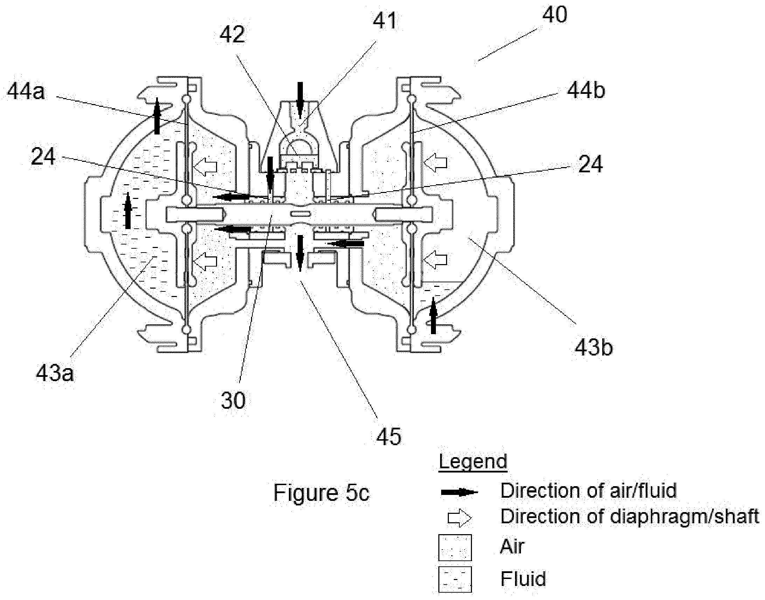

Now as shown in Figure 5c, build-up of pressure of compressed air at air side of left chamber (43a) causes pressure of compressed air to be greater than pressure of fluid drawn into fluid side of the left chamber (43a) and fluid is pumped outwards while fluid is drawn into fluid side of the right chamber (43b). As with prior art AODD pumps, check valves (not illustrated) ensure that there is no backflow of fluid into fluid inlet and fluid travels in only one direction, which is towards the fluid outlet.

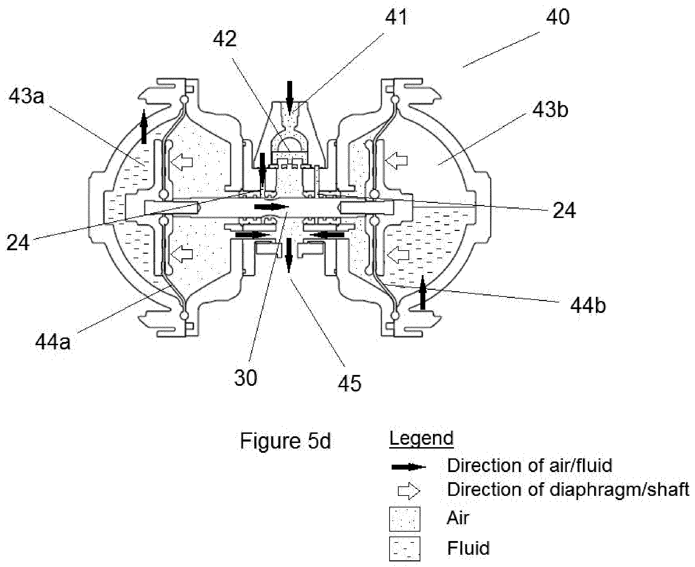

In Figure 5d, shaft (30), left diaphragm (44a), and right diaphragm (44b) has reached left terminal point and changes direction. Due to increased shift rate of the shaft (30), compressed air is not fully vacated from right chamber (43b) by the time the shaft (30), left diaphragm (44a) and right diaphragm (44b) shift direction and some amount of compressed air remains in compressed air side of the right chamber (43b). As such, amount of compressed air needed to pressurize right chamber (43b) is less and this translates into less compressed air required to operate the AODD pump. Fluid can now be drawn again into fluid side of left chamber (43a) while fluid drawn into fluid side of right chamber (43b) is now pumped outwards. Indentations (34) are in line with holes (24) at left side of the bushing (28) and air is allowed to escape to compressed air outlet (45). Shaft (30), left diaphragm (44a), and right diaphragm (44b) move rightwards and the cycle begins anew.

## Claims

1. An air-operated double diaphragm pump, the pump (40) comprising:
a pair of chambers (43a;43b) defining a volumetric space fillable with air and fluid wherein the volumetric space within each chamber (43a;43b) is separated into an air side and a fluid side by a diaphragm (44a;44b);
a shaft (30) movable between a first terminal point and a second terminal point wherein the shaft (30) is fastened to each diaphragm (44a;44b) in the pair of chambers (43a;43b) and wherein the shaft (30) includes a plurality of indentations (34) disposed radially lengthwise along length of the shaft (30), wherein the indentations (34) allow passage of air;
a bushing (28) adapted to receive the shaft (30), the bushing (28) and shaft (30) being in sliding engagement with each other, the bushing (28) includes at least two vents (22) formed on the bushing and a hole (24) formed at each respective terminal portion of the bushing (28) to allow passage of air; and
a slide valve (42) traversable between one position and another position for directing compressed air from a compressed air inlet (41) into a chamber (43a;43b) based on the position of the slide valve (42); wherein the indentations (34) disposed along the shaft (30) and hole (24) formed at each terminal portion of the bushing (28) are alignable to create a path for air to travel from the compressed air inlet (41) to a compressed air outlet (45) and generate differential pressure to cause the slide valve (42) to change direction and direct air to another chamber (43a/43b)
**characterized in that**:
the bushing (28) further includes ribs (26) protruding radially outwards from inner surface of the bushing (28) toward the shaft (30) and disposed along length of the bushing (28), said ribs (26) varying the inner diameter of the bushing (28) at different sections along the length of the bushing (28) to increase bushing relief area;
said pair of chambers (43a;43b) are connected to the compressed air outlet (45) and allow compressed air to bleed freely through the compressed air outlet (45); and
said slide valve (42) changes position before the compressed air in the air side of the chamber (43a;43b) becomes fully vacated and the remaining compressed air in the air side of the chamber (43a;43b) is utilized to pressurize the chamber (43a;43b).

2. The pump (40) as claimed in claim 1, wherein the indentations (34) and hole (24) are aligned to create a path for air to travel when the shaft (30) reaches a terminal point.

3. The pump (40) as claimed in claim 2, wherein the shaft (30) further includes a threaded hole (32) formed at each terminal ends of the shaft (30) respectively, the threaded holes (32) are adapted to receive threaded members for mechanical connection with first and second diaphragms (44a;44b) in order to fasten the shaft (30) to the first and second diaphragm (44a;44b).

4. The pump (40) as claimed in claim 1, wherein the indentations (34) are disposed at middle portion of the shaft (30).

## Patentansprüche

1. Luftbetriebene Doppelmembranpumpe (40), aufweisend:
ein Paar an Kammern (43a; 43b), die einen volumetrischen Raum definieren, der mit Luft und Flüssigkeit befüllbar ist, wobei der volumetrische Raum innerhalb jeder Kammer (43a; 43b) durch eine Membran (44a; 44b) in eine Luftseite und eine Flüssigkeitenseite unterteilt ist;
eine Welle (30), die zwischen einem ersten Endpunkt und einem zweiten Endpunkt bewegbar ist, wobei die Welle (30) an jeder Membran (44a; 44b) in dem Paar an Kammern (43a; 43b) befestigt ist und wobei die Welle (30) eine Mehrzahl an Einkerbungen (34) enthält, die radial längsseitig entlang der Länge der Welle (30) angeordnet sind, wobei die Einkerbungen (34) das Durchlassen von Luft erlauben;
eine Hülse (28), die adaptiert ist, um die Welle (30) zu empfangen, wobei die Hülse (28) und die Welle (30) im Gleiteingriff miteinander sind, wobei die Hülse (28) mindestens zwei Lüftungsöffnungen (22), die auf der Hülse gebildet sind, und ein Loch (24), das jeweils an jedem Endpunkt der Hülse (28) gebildet ist, um das Durchlassen von Luft zu erlauben, enthält; und
ein Schiebeventil (42), das zwischen einer Position und einer anderen Position verschiebbar ist, um Druckluft basierend auf der Position des Schiebeventils (42) von einem Drucklufteinlass (41) in eine Kammer (43a; 43b) zu leiten; wobei die Einkerbungen (34), die entlang der Welle (30) und dem Loch (24), das an jedem Endpunkt der Hülse (28) gebildet ist, angeordnet sind, ausgerichtet werden können, um einen Pfad zu schaffen, auf dem Luft vom Drucklufteinlass (41) zu einem Druckluftauslass (45) strömen kann, und um einen Differenzialdruck zu erzeugen, der das Schiebeventil (42) dazu veranlasst, die Richtung zu wechseln und Luft an eine andere Kammer (43a/43b) zu leiten,
**dadurch gekennzeichnet, dass**:
die Hülse (28) ferner Rippen (26) enthält, die aus einer Innenfläche der Hülse (28) radial nach außen in Richtung der Welle (30) hervorstehen und entlang der Länge der Hülse (28) angeordnet sind, wobei die Rippen (26) den Innendurchmesser der Hülse (28) an verschiedenen Abschnitten entlang der Länge der Hülse (28) verändern, um einen Hülsenentlastungsbereich zu vergrößern;
das Paar an Kammern (43a; 43b) mit dem Druckluftauslass (45) verbunden ist und der Druckluft erlaubt, durch den Luftdruckablass (45) frei abgelassen zu werden; und
das Schiebeventil (42) die Position ändert, bevor die Druckluft in der Luftseite der Kammer (43a; 43b) vollkommen leer wird und die verbleibende Druckluft in der Luftseite der Kammer (43a; 43b) eingesetzt wird, um die Kammer (43a; 43b) unter Druck zu setzen.

2. Pumpe (40) nach Anspruch 1, wobei die Einkerbungen (34) und das Loch (24) ausgerichtet sind, um einen Pfad zu schaffen, auf dem Luft strömen kann, wenn die Welle (30) einen Endpunkt erreicht.

3. Pumpe (40) nach Anspruch 2, wobei die Welle (30) ferner ein Gewindeloch (32) enthält, das jeweils auf jedem Endpunkt der Welle (30) gebildet ist, wobei die Gewindelöcher (32) adaptiert sind, um Gewindebauteile für eine mechanische Verbindung mit der ersten und zweiten Membran (44a; 44b) zu empfangen, um die Welle (30) an der ersten und zweiten Membran (44a; 44b) zu befestigen.

4. Pumpe (40) nach Anspruch 1, wobei die Einkerbungen (34) an einem Mittelstück der Welle (30) angeordnet sind.

## Revendications

1. Pompe pneumatique à double membrane, la pompe (40) comprenant :
une paire de chambres (43a ; 43b) définissant un espace volumétrique pouvant être rempli avec de l'air et du fluide dans laquelle l'espace volumétrique dans chaque chambre (43a ; 43b) est séparé en un côté air et un côté fluide par une membrane (44a ; 44b) ;
un arbre (30) mobile entre un premier point terminal et un second point terminal dans laquelle l'arbre (30) est fixé à chaque membrane (44a ; 44b) dans la paire de chambres (43a ; 43b) et dans lequel l'arbre (30) inclut une pluralité d'encoches (34) disposées radialement longitudinalement le long de la longueur de l'arbre (30), dans lequel les encoches (34) permettent le passage d'air ;
une bague (28) adaptée pour recevoir l'arbre (30), la bague (28) et l'arbre (30) étant en prise coulissante l'un avec l'autre, la bague (28) inclut au moins deux ventilations (22) formées sur la bague et un trou (24) formé au niveau de chaque portion terminale respective de la bague (28) pour permettre le passage d'air ; et
un distributeur à tiroir (42) traversable entre une position et une autre position pour diriger de l'air comprimé d'une entrée d'air comprimé (41) dans une chambre (43a ; 43b) sur la base de la position du distributeur à tiroir (42) ; dans laquelle les encoches (34) disposées le long de l'arbre (30) et du trou (24) formé au niveau de chaque portion terminale de la bague (28) peuvent être alignées pour créer un trajet pour le déplacement de l'air de l'entrée d'air comprimé (41) à une sortie d'air comprimé (45) et générer une pression différentielle pour amener le distributeur à tiroir (42) à changer de direction et diriger l'air vers l'autre chambre (43a/43b),
**caractérisée en ce que** :
la bague (28) inclut en outre des nervures (26) faisant saillie radialement vers l'extérieur depuis la surface intérieure de la bague (28) vers l'arbre (30) et disposées le long de la longueur de la bague (28),
lesdites nervures (26) variant le diamètre intérieur de la bague (28) au niveau de différentes sections le long de la longueur de la bague (28) pour augmenter la zone de relief de la bague ;
ladite paire de chambres (43a ; 43b) est raccordée à la sortie d'air comprimé (45) et permet à de l'air comprimé de s'évacuer librement au travers de la sortie d'air comprimé (45) ; et
ledit distributeur à tiroir (42) change la position avant que l'air comprimé dans le côté air de la chambre (43a ; 43b) ne s'évacue complètement et l'air comprimé restant dans le côté air de la chambre (43a ; 43b) est utilisé pour mettre sous pression la chambre (43a ; 43b).

2. Pompe (40) selon la revendication 1, dans laquelle les encoches (34) et le trou (24) sont alignés pour créer un trajet pour le déplacement de l'air lorsque l'arbre (30) atteint un point terminal.

3. Pompe (40) selon la revendication 2, dans laquelle l'arbre (30) inclut en outre un trou fileté (32) formé au niveau de chaque extrémité terminale de l'arbre (30) respectivement, les trous filetés (32) sont adaptés pour recevoir des éléments filetés pour le raccordement mécanique avec des premières et secondes membranes (44a ; 44b) afin de fixer l'arbre (30) aux première et seconde membranes (44a ; 44b).

4. Pompe (40) selon la revendication 1, dans laquelle les encoches (34) sont disposées au niveau d'une portion médiane de l'arbre (30).
